(19) Europäisches Patentamt
European Patent Office
Office européen des brevets

(11) **EP 2 513 622 B1**

(12) **EUROPÄISCHE PATENTSCHRIFT**

(45) Veröffentlichungstag und Bekanntmachung des Hinweises auf die Patenterteilung:
**07.01.2015 Patentblatt 2015/02**

(51) Int Cl.:
***G01L 9/00*** *(2006.01)*       ***C04B 37/00*** *(2006.01)*
***C04B 35/00*** *(2006.01)*

(21) Anmeldenummer: **10774230.6**

(22) Anmeldetag: **10.11.2010**

(86) Internationale Anmeldenummer:
**PCT/EP2010/067158**

(87) Internationale Veröffentlichungsnummer:
**WO 2011/072959 (23.06.2011 Gazette 2011/25)**

(54) **KERAMISCHES PRODUKT UND VERFAHREN ZU DESSEN HERSTELLUNG**

CERAMIC PRODUCT AND PROCESS FOR THE PRODUCTION THEREOF

PRODUIT CERAMIQUE ET PROCEDE POUR SA FABRICATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.12.2009 DE 102009054909**

(43) Veröffentlichungstag der Anmeldung:
**24.10.2012 Patentblatt 2012/43**

(73) Patentinhaber: **Endress+Hauser GmbH+Co. KG**
**79689 Maulburg (DE)**

(72) Erfinder:
• **BERLINGER, Andrea**
**76532 Baden-Baden (DE)**
• **DREWES, Ulfert**
**79379 Müllheim (DE)**
• **ROSSBERG, Andreas**
**79713 Bad Säckingen (DE)**
• **SCHLEIFERBÖCK, Detlef**
**79688 Hausen (DE)**
• **SCHMIDT, Elke**
**79713 Bad Säckingen (DE)**

(74) Vertreter: **Andres, Angelika Maria**
**Endress+Hauser (Deutschland) AG+Co. KG**
**PatServe**
**Colmarer Strasse 6**
**79576 Weil am Rhein (DE)**

(56) Entgegenhaltungen:
EP-A1- 0 332 978        EP-A1- 0 544 934
EP-A2- 0 351 701        EP-A2- 0 373 536
EP-A2- 0 445 382        EP-A2- 0 490 807
US-A1- 2004 016 570

**Beschreibung**

Die vorliegende Erfindung betrifft ein keramisches Produkt, insbesondere einen keramischen Drucksensor und ein Verfahren zu dessen Herstellung.

Keramische Drucksensoren umfassen einen Grundkörper und eine Messmembran, wobei die Messmembran mittels eines Aktivhartlots gefügt ist. Ein geeignetes Aktivhartlot zum Fügen von Keramikteilen aus Korund ist beispielsweise eine Zr-Ni-Ti-Legierung, da diese von ihrem Wärmeausdehnungskoeffizienten mit Korund kompatibel ist.

Ein Drucksensor, der mit einer Zr-Ni-Ti-Aktivhartlotpaste gefügt wird, ist EP 0 544 934 A1 offenbart. EP 0 445 382 A2 offenbart einen Drucksensor mit einem Grundkörper und einer Membran. Grundkörper und Membran des Drucksensors bestehen aus Keramik, Glas oder einem einkristallinen Material. Grundkörper sowie Membran sind durch ein zugleich als Abstandshalter dienendes Formteil aus Zr-Ni-Ti-Aktivtot miteinander verlötet. EP 0 490 807 A2 offenbart die Herstellung eines Aktivhartlotbands.

EP 0 332 978 A1 offenbart eine Zr-Ni-Folie als Material zum Fügen von Komponenten. In der Praxis erweist es sich als schwierig, die Benetzung des keramischen Werkstoffs durch das Aktivhartlot zu kontrollieren, wobei die Balance zwischen einer unvollständigen Benutzung und einer Ausbreitung des Aktivhartlots über die beabsichtige Erstreckung der Fügestelle zu finden ist.

Es ist daher die Aufgabe der vorliegenden Erfindung, ein Verfahren und ein danach hergestelltes keramisches Produkt bereitzustellen, welches die Nachteile des Stands der Technik überwindet.

Die Aufgabe wird erfindungsgemäß gelöst durch das Verfahren gemäß Patentanspruch 1 und das keramische Produkt gemäß Patentanspruch 6.

Das erfindungsgemäße Verfahren umfasst: Bereitstellen eines ersten Keramikteils und eines zweiten Keramikteils; Bereitstellen eines Aktivhartlotmaterials zwischen dem ersten Keramikteil und dem zweiten Keramikteil; Erhitzen des Aktivhartlots in einem Lötprozess, wobei erfindungsgemäß das Aktivhartlotmaterial in der Weise bereitgestellt wird, dass zunächst zumindest ein Oberflächenabschnitt zumindest eines der Keramikteile, mit einer aktiven Komponente des Aktivhartlots, nämlich Titan und/oder Zirkonium beschichtet wird, und dass auf dem beschichteten Abschnitt eine Legierung bereitgestellt wird, die durch das Aufschmelzen der Legierung während des Erhitzens mit der Beschichtung legiert und eine metallische Fügestelle zwischen den beiden Keramikteilen bildet, wobei zumindest die aktive Komponente mit dem Keramikteil reagiert, wobei die Fügestelle eine Zr-Ni-Ti-Legierung aufweist.

Der Lötprozess kann insbesondere ein Vakuumlötproless oder ein Lötprozess unter Schutzgas sein.

In einer Weiterbildung der Erfindung werden beide Keramikteile zumindest in einem Oberflächenabschnitt mit mindestens einer aktiven Komponente des Aktivhartlots beschichtet, und die Legierung wird zwischen den beschichteten Abschnitten des ersten Keramikteils und des zweiten Keramikteils bereitgestellt.

In einer Weiterbildung der Erfindung weist die Beschichtung mit der mindestens einen aktiven Komponente eine Stärke von nicht weniger als 10 nm, insbesondere nicht weniger als 40 nm, und bevorzugt nicht weniger als 80 nm auf.

In einer Weiterbildung der Erfindung weist die Beschichtung mit der mindestens einen aktiven Komponente eine Stärke von nicht mehr als 400 nm, insbesondere nicht mehr als 300 nm, und bevorzugt nicht mehr als 200 nm auf.

Die mindestens eine aktive Komponente umfasst erfindungsgemäß Titan oder Zirkonium, wobei die Fügestelle eine Zr-Ni-Ti-Legierung aufweist. In einer Weiterbildung der Erfindung enthält die mindestens eine Beschichtung Zr und Ti.

Zumindest eines der Keramikteile weist gemäß einer Weiterbildung der Erfindung Korund auf.

Gemäß einer Weiterbildung der Erfindung umfassen die Keramikteile eine Messmembran und einen Grundkörper eines Drucksensors.

Das erfindungsgemäße keramische Produkt umfasst ein erstes Keramikteil und ein zweites Keramikteil, wobei das erste Keramikteil mit dem zweiten Keramikteil über eine Fügestelle verbunden ist, wobei die Fügestelle ein Aktivhartlot aufweist, wobei die Fügestelle eine inhomogene Verteilung der Komponenten das Aktivhartlots aufweist, wobei zumindest zu einer Grenzfläche hin die mindestens aktive Komponente des Aktivhartlots angereichert ist, wobei gilt:

$$\frac{\int\limits_{-d/2}^{d/2} |x| \cdot (c_i(x) - c_i(0)) dx}{\int\limits_{-d/2}^{d/2} c_i(x) - c_i(0) dx} \geq \frac{a \cdot d}{4},$$

wobei $a \geq 1{,}25$, vorzugsweise $a \geq 1{,}5$ und weiter bevorzugt $a \geq 1{,}7$ gilt.

Hierbei ist $d$ die Stärke der Fügestelle, d.h. der Abstand der Keramikteile im Bereich der Fügestelle, wobei der Nullpunkt in der Mitte zwischen den Keramikteilen liegt, und wobei $c_i(x)$ die lokale Konzentration der mindestens einen aktiven Komponente in Masse-% ist.

Gemäß einer Weiterbildung der Erfindung gilt:

$$\frac{\int_{-d/2}^{d/2} |x| \cdot c_i(x)\,dx}{\int_{-d/2}^{d/2} c_i(x)\,dx} \geq \left.\frac{a \cdot d}{4}\right.,$$

wobei $a \geq 1$ insbesondere $a \geq 1,1$ und vorzugsweise $a \geq 1,3$.

Gemäß einer Weiterbildung der Erfindung umfasst die Fügestelle eine ternäre Zr-Ni-Ti-Legierung mit $c_{Zr}$ Masse-% Zr, $c_{Ni}$ Masse-% Ni und $c_{Ti}$ Masse-% Ti, wobei insbesondere gilt $100 > c_{Zr} + c_{Ni} + c_{Ti} \geq 100 - R$, mit $R < 0,5$, vorzugsweise $R < 0,3$ und weiter bevorzugt $R < 0,25$. Wobi die $c_i$ die gemittelte Konzentration der Komponente i über die Fügestelle ist.

Die Verunreinigungen können beispielsweise Sauerstoff, Kohlenstoff und andere Metalle umfassen, wobei der Anteil anderer Metalle, bezogen auf die Masse, beispielsweise nicht mehr als 400 ppm vorzugsweise nicht mehr als 300 ppm und besonders bevorzugt nicht mehr als 250 ppm beträgt. Der Sauerstoffanteil beträgt beispielsweise nicht mehr als 3000 ppm, vorzugsweise nicht mehr als 2500 ppm und weiter bevorzugt nicht mehr als 2200 ppm. Der Sauerstoff kann insbesondere In Form von Oxiden der Legierungskomponenten vorliegen. Kohlenstoff kann beilspielsweise in einer Konzentration von nicht mehr als 300 ppm,

vorzugsweise nicht mehr als 200 ppm und besonders bevorzugt nicht mehr als 150 ppm vorliegen. Bei der Bestimmung der Konzentration der metallischen Verunreinigungen sind Aluminiumatome, die aus der Matrix der Keramikteile in die Legierung der Fügestelle diffundiert sind, nicht als Verunreinigung werten. Gleichermaßen sind die in die Matrix der Keramikteile eindiffundierten und dort oxidierten aktiven Legierungskomponenten kein Indikator für Sauerstoff-Verunreinigungen.

Bei der Bestimmung der Konzentration der Verunreinigungen kann daher beispielsweise nur ein zentraler Volumenbereich der Fügestelle betrachtet werden, der sich beispielsweise von -0,4 d bis 0,4 d, vorzugsweise von -0,35 d bis 0,35 d, erstreckt.

Für die Konzentrationen Komponenten der Legierung gilt beispielsweise $55 < c_{Zr} < 65,5$, $20,5 < c_{Ni} < 27,5$ und $14 < c_{Ti} < 17,5$. In einer derzeit bevorzugten Ausgestaltung gilt: $61 < c_{Zr} < 63,5$, $21,5 < c_{Ni} < 24$ und $14,5 < c_{Ti} < 15,5$. Besonders bevorzugte Zielwerte für die Konzentrationen sind $c_{Zr} = 63$, $c_{Ni} = 22$ und $c_{Ti} = 15$, wobei für den Fachmann offensichtlich ist, dass sich diese genauen Werte in der Praxis nur mit gewissen Toleranzen erreichen lassen.

Aufgrund der Präparation der Fügestelle durch eine Beschichtung eines Keramikteils mit einer aktiven Komponente ist davon auszugehen, dass die nicht aktive Komponente an der Grenzfläche zum Keramikteil gegenüber dem Volumen der Fügestelle in einer geringeren Konzentration vorkommt. Insofern liegt beispielsweise ein Grenzbereich des Aktivhartlots vor, in dem die Konzentration eindiffundierter Aluminiumatome aus der Keramik größer ist als die Konzentration der Ni-Atome in diesem Bereich. Dieser Bereich erstreckt sich beispielsweise nicht weniger als 10 nm, insbesondere nicht weniger als 40 nm, und bevorzugt nicht weniger als 80 nm von der Grenzfläche zwischen dem Keramikteil und der Fügestelle in Richtung der Fügestelle. Die Grenzfläche ist für diese Betrachtung definiert als die Fläche mit der x-Koordinate, welche den Bereich mit $c_{Zr}(x) + c_{Ni}(x) + c_{Ti}(x) \geq c_{Al}(x) + c_o(x)$ trennt von dem Bereich mit $c_{Zr}(x) + c_{Ni}(x) + c_{Ti}(x) \leq c_{Al}(x) + c_o(x)$.

In einer Weiterbildung der Erfindung weist die Fügestelle eine Stärke von nicht weniger als 0,5 $\mu$m und nicht mehr als 150 $\mu$m, insbesondere nicht mehr als 80 $\mu$m, und bevorzugt nicht mehr als 50 $\mu$m auf.

Die Ermittlung der Konzentrationen $c_i(x)$ kann beispielsweise mit einem TOF-SIMS-Verfahren erfolgen, also mit einer Sekundärionenmassenspektroskopie nach dem Laufzeitverfahren.

Gemäß einer Weiterbildung der Erfindung ist das keramische Produkt ein Drucksensor, wobei die Keramikteile einen Grundkörper und eine Messmembran umfassen.

Der erfindungsgemäße Drucksensor umfasst weiterhin einen hier nicht näher dargestellten Wandler zum Wandeln einer druckabhängigen Verformung der Messmembran in ein elektrisches oder optisches Signal. Der Wandler kann insbesondere ein kapazitiver, ein resistiver oder ein interferometrischer Wandler sein.

Der Drucksensor kann insbesondere einen Absolutdrucksensor, einen Relativdrucksensor oder einen Differenzdrucksensor umfassen. Bei einem Differenzdrucksensor, kann eine Messmembran beispielsweise zwischen zwei Grundkörpern angeordnet sein, oder ein Grundkörper trägt zwei Messmembranen, die über eine Übertragungsflüssigkeit im Grundkörper hydraulisch miteinander gekoppelt sind. Die Fügestelle zwischen der einen Messmembran und den beiden Grundkörpern bzw. zwischen den beiden Messmembranen und dem einen Grundkörper können erfindungsgemäß so präpariert werden, dass zunächst jeweils eine Beschichtung des Grundkörpers und/oder der Messmembran im bereich der Fügestellen mit einer aktiven Komponente des Aktivhartlots erfolgt, bevor ein Aktivhartlotformteil zur Durchführung des Lötprozesses zwischen den beschichteten Keramikteilen eingebracht wird.

Die Erfindung wird nun anhand des in der Zeichnung dargestellten Ausführungsbeispiels dargestellt.

Es zeigt:

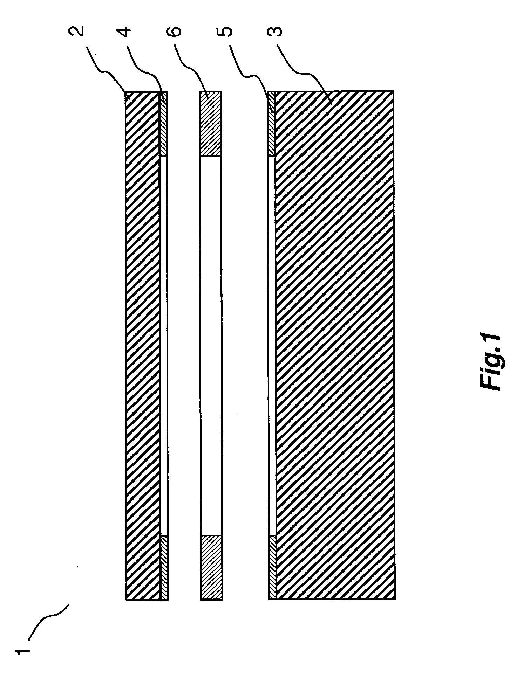

Fig. 1: Komponenten eines erfindungsgemäßen Drucksensors.

Die in Fig 1 dargestellten Komponenten eines keramischen Drucksensors 1 umfassen eine kreisscheibenförmige Messmembran 2 einen kreisscheibenförmigen Grundkörper 3 aus Korund. Die Messmembran 1 und der Grundkörper 2 weisen beispielsweise einen Durchmesser von etwa 20 mm auf. Die Messmembran 1 und der Grundkörper 2 sind mittels eines Zr-Ni-Ti-Aktivhartlots in einem Hochvakuumlötprozess druckdicht zu verbinden.

Abweichend zum bisherigen Standardverfahren wird jedoch auf der Messmembran 2 und dem Grundkörper 3 im Bereich der Fügestelle jeweils eine ringförmige Beschichtung 4, 5 einer aktiven Komponente abgeschieden. Dies kann beispielsweise eine Titan-Schicht in einer Stärke von beispielsweise jeweils 150 nm sein. Die Beschichtungen 4, 5 können beispielsweise in einem Sputterprozess präpariert werden.

Zwischen den beiden Beschichtungen wird dann ein mit den Beschichtungen fluchtendes, ringförmiges Aktivhartlotformteil 6 angeordnet, welches beispielsweise eine Stärke von 20 $\mu$m aufweist. In der Legierung des Aktivhartlotformteils 6 kann die Konzentration des Titans reduziert sein, beispielsweise um knapp 10%, um im Mittel über die Fügestelle nach dem Lötprozess die ideale Legierung mit $c_{Zr} = 63$, $c_{Ni} = 22$ und $c_{Ti} = 15$ anzunähern. Für das Aktivhartlotformteil würde dann beispielsweise gelten: $c_{Zr} = 64$, $c_{Ni} = 22,5$ und $c_{Ti} = 13,5$.

Nachdem das Aktivhartlotformteil zwischen den Beschichtungen angeordnet ist, werden die Komponenten in einem Lötprozess, insbesondere einem Hochvakuumlötprozess, miteinander verbunden.

Anstelle einer Beschichtung mit Titan, kann auch eine Beschichtung mit Zirkonium oder mit einer Mischung aus Titan und Zirkonium erfolgen.

Durch die Beschichtungen mit der aktiven Komponente ist eine verbesserte Kontrolle der Wechselwirkung zwischen der aktiven Komponente und dem Korund gegeben.

**Patentansprüche**

1. Verfahren zum Herstellen eines Keramikprodukts, umfassend:

   Bereitstellen eines ersten Keramikteils und eines zweiten Keramikteils;
   Bereitstellen eines Aktivhartlotmaterials zwischen dem ersten Keramikteil und dem zweiten Keramikteil;
   Erhitzen das Aktivhartlots in einem Lötprozess, **dadurch gekennzeichnet, dass**
   das Aktivhartlotmaterial in der Weise bereitgestellt wird, dass zunächst zumindest ein Oberflächenabschnitt zumindest eines der Keramikteile, mit einer aktiven Komponente des Aktivhartlots, nämlich Titan und/oder Zirkonium beschichtet wird,
   und dass auf dem beschichteten Abschnitt eine Legierung bereitgestellt wird, die durch das Aufschmelzen der Legierung während des Erhitzens mit der Beschichtung legiert und eine metallische Fügestelle zwischen den beiden Keramikteilen bildet, wobei zumindest die Aktivkomponente mit zumindest einem Keramikteil reagiert, wobei die Fügestelle eine Zr-Ni-Ti-Legierung aufweist.

2. Verfahren nach Anspruch 1, wobei beide Keramikteile zumindest in einem Oberflächenabschnitt mit mindestens einer aktiven Komponente des Aktivhartlots beschichtet werden, und wobei die Legierung zwischen den beschichteten Abschnitten des ersten Keramikteils und des zweiten Keramikteils bereitgestellt wird.

3. Verfahren nach Anspruch 1 oder 2, wobei der Lötprozess ein Vakuumlötprozess oder ein Lötprozess unter Schutzgas ist.

4. Verfahren nach einem der vorhergehenden Ansprüche, wobei die Beschichtung mit der mindestens einen aktiven Komponente eine Stärke von nicht weniger als 10 nm, insbesondere nicht weniger als 40 nm, und bevorzugt nicht weniger als 80 nm aufweist.

5. Verfahren nach einem der vorhergehenden Ansprüche, wobei die Beschichtung mit der mindestens einen aktiven Komponente eine Stärke von nicht mehr als 400 nm, insbesondere nicht mehr als 300 nm, und bevorzugt nicht mehr als 200 nm aufweist.

6. Verfahren nach einem der vorhergehenden Ansprüche, wobei zumindest eines der Keramikteile Korund aufweist.

**7.** Keramisches Produkt (1), umfassend
mindestens ein erstes Keramikteil (2) und ein zweites Keramikteil (3), wobei das erste Keramikteil (2) mit dem zweiten Keramikteil (3) über eine mittels eines Aktivhartlots gebildete Fügestelle verbunden ist, wobei die Fügestelle eine Zr-Ni-Ti-Legierung aufweist, **dadurch gekennzeichnet,**
**dass** die Fügestelle eine inhomogene Verteilung der Komponenten der Zr-Ni-Ti-Legierung aufweist, wobei zumindest an einer Grenzfläche zwischen der Zr-Ni-Ti-Legierung und der Keramik mindestens eine aktive Komponente des Aktivhartlots, nämlich Ti und/oder Zr angereichert ist, wobei gilt:

$$\frac{\int_{-d/2}^{d/2}|x|\,(c_i(x)-c_i(0))\,dx}{\int_{-d/2}^{d/2}c_i(x)-c_i(0)\,dx} \geq \frac{a*d}{4},$$

wobei a $\geq$ 1,25, vorzugsweise a $\geq$ 1,5, weiter bevorzugt a $\geq$ 1,7, wobei d die Stärke der Fügestelle ist, wobei der Nullpunkt in der Mitte der Fügestelle zwischen den Keramikteilen liegt, und wobei $c_i(x)$ die ortsabhängige Konzentration der mindestens einen aktiven Komponente, nämlich Ti oder Zr in Masse-% ist.

**8.** Keramisches Produkt nach Anspruch 7, wobei gilt:

$$\frac{\int_{-d/2}^{d/2}|x|\,c_i(x)\,dx}{\int_{-d/2}^{d/2}c_i(x)\,dx} \geq \frac{a*d}{4} \qquad \frac{\int_{-d/2}^{d/2}|x|\cdot c_i(x)\,dx}{\int_{-d/2}^{d/2}c_i(x)\,dx} \geq \frac{a\cdot d}{4},$$

wobei a $\geq$ 1,1, vorzugsweise a $\geq$ 1,3 wobei d die Stärke der Fügestelle ist, wobei der Nullpunkt in der Mitte der Fügestelle zwischen den Keramikteilen liegt, und wobei $c_i(x)$ die ortsabhängige Konzentration der mindestens einen aktiven Komponente in Masse-% ist.

**9.** Keramisches Produkt nach einem der Ansprüche 7 oder 8, wobei das keramische Produkt ein Drucksensor (1) ist, wobei die Keramikteile einen Grundkörper (3) und eine Messmembran (2) umfassen.

**10.** Keramisches Produkt nach einem der Ansprüche 7 bis 9, wobei die Fügestelle eine ternäre Zr-Ni-Ti-Legierung mit $c_{Zr}$ Masse-% Zr, $c_{Ni}$ Masse-% Ni und $c_{Ti}$ Masse-% Ti, wobei gilt 100 > $c_{Zr}$ + $c_{Ni}$ + $c_{Ti}$ $\geq$ 100 - R, mit R < 0,5, insbesondere R < 0,3 und bevorzugt R < 0,25.

**11.** Keramisches Produkt nach Anspruch 10, wobei für die Konzentrationen Komponenten der Legierung gilt 55 < $c_{Zr}$ < 65,5, 20,5 < $c_{Ni}$ < 27,5 und 14 < $c_{Ti}$ <17,5, insbesondere 61 < $c_{Zr}$ < 63,5, 21,5 < $c_{Ni}$ < 24 und 14,5 < $c_{Ti}$ <15,5.

**12.** Keramisches Produkt nach einem der Ansprüche 10 bis 11, wobei ein Grenzbereich vorliegt, in dem die Konzentration eindiffundierter Aluminiumatome aus der Keramik in dem Aktivhartlot größer ist als die Konzentration der Ni-Atome in diesem Bereich, wobei dieser Bereich sich nicht weniger als 10 nm, insbesondere nicht weniger als 40 nm, und bevorzugt nicht weniger als 80 nm von der Grenzfläche zwischen dem Keramikteil und dem Aktivhartlot in Richtung des Aktivhartlots erstreckt.

**Claims**

**1.** Method to produce a ceramic product comprising:

The provision of a first ceramic part and a second ceramic part;
The provision of an active brazing solder material between the first ceramic part and the second ceramic part;
Heating the active brazing solder in a solder process, **characterized in that**
the active brazing solder material is provided in such a way that initially at least one surface section of at least one of the ceramic parts is coated with an active component of the active brazing solder, namely titanium and/or zirconium,

and **in that** an alloy is provided on the coated section which is alloyed to the coating by the alloy fusing during the heating stage and forms a metal joint between the two ceramic parts, wherein at least the active component reacts with at least one ceramic part, wherein the junction has a Zr-Ni-Ti alloy.

2. Method as claimed in Claim 1, wherein both ceramic parts are coated with at least one active component of the brazing solder at least in one section of the surface, and wherein the alloy is provided between the coated sections of the first ceramic part and the second ceramic part.

3. Method as claimed in Claim 1 or 2, wherein the soldering process is a vacuum process or a soldering process under shielding gas.

4. Method as claimed in one of the previous claims, wherein the coating with the at least one active component has a thickness of not less than 10 nm, particularly not less than 40 nm and preferably not less than 80 nm.

5. Method as claimed in one of the previous claims, wherein the coating with the at least one active component has a thickness of no more than 400 nm, particularly no more than 300 nm and preferably no more than 200 nm.

6. Method as claimed in one of the previous claims, wherein at least one of the ceramic parts features corundum.

7. Ceramic product (1), comprising at least a first ceramic part (2) and a second ceramic part (3), wherein the first ceramic part (2) is connected to the second ceramic part (3) via a joint formed using an active brazing solder, wherein the joint has a Zr-Ni-Ti alloy, **characterized in that** the joint has an inhomogeneous distribution of the components of the Zr-Ni-Ti alloy, wherein at least one active component of the active brazing solder, namely Ti and/or Zr, is concentrated at least at an interface between the Zr-Ni-Ti alloy and the ceramic, wherein the following formula applies:

$$\frac{\int_{-d/2}^{d/2} |x|\,(c_i(x) - c_i(0))\,dx}{\int_{-d/2}^{d/2} c_i(x) - c_i(0)\,dx} \geq \frac{a \cdot d}{4},$$

where $a \geq 1.25$, preferably $a \geq 1.5$, and particularly preferably $a \geq 1.7$, wherein d is the thickness of the joint, wherein the zero point is situated in the middle of the joint between the ceramic parts, and wherein $c_i(x)$ is the location-dependent concentration of the at least one active component, namely Ti or Zr, in percentage mass.

8. Ceramic product as claimed in Claim 7, wherein

$$\frac{\int_{-d/2}^{d/2} |x|\,c_i(x)\,dx}{\int_{-d/2}^{d/2} c_i(x)\,dx} \geq \frac{a \cdot d}{4} \qquad \frac{\int_{-d/2}^{d/2} |x| \cdot c_i(x)\,dx}{\int_{-d/2}^{d/2} c_i(x)\,dx} \geq \frac{a \cdot d}{4},$$

where $a \geq 1.1$, preferably $a \geq 1.3$, wherein d is the thickness of the joint, wherein the zero point is situated in the middle of the joint between the ceramic parts, and wherein $c_i(x)$ is the location-dependent concentration of the at least one active component in percentage mass.

9. Ceramic product as claimed in one of the Claims 7 or 8, wherein the ceramic product is a pressure sensor (1), wherein the ceramic parts comprise a meter body (3) and a measuring membrane (2).

10. Ceramic product as claimed in one of the Claims 7 to 9, wherein the joint is a ternary Zr-Ni-Ti alloy with a percentage mass $c_{Zr}$ of Zr, a percentage mass $c_{Ni}$ of Ni and a percentage mass $c_{Ti}$ of Ti, wherein the following formula applies: $100 > c_{Zr} + c_{Ni} + c_{Ti} \geq 100 - R$, with $R < 0.5$, particularly $R < 0.3$ and preferably $R < 0.25$.

11. Ceramic product as claimed in Claim 10, wherein the following formula applies for the concentrations of the alloy components: 55 < $c_{Zr}$ < 65.5, 20.5 < $c_{Ni}$ < 27.5 and 14 < $c_{Ti}$ < 17.5, particularly 61 < $c_{Zr}$ < 63.5, 21.5 < $c_{Ni}$ < 24 and 14.5 < $c_{Ti}$ < 15.5.

12. Ceramic product as claimed in one of the Claims 10 to 11, wherein there is a boundary area in which the concentration of aluminum atoms diffused from the ceramic is higher in the active brazing solder than the concentration of the Ni atoms in this area, wherein this areas extends no less than 10 nm, particularly no less than 40 nm and preferably no less than 80 nm from the interface between the ceramic part and the active brazing solder, in the direction of the active brazing solder.

**Revendications**

1. Procédé destiné à la fabrication d'un produit en céramique, comprenant :

La mise à disposition d'une première pièce de céramique et d'une deuxième pièce de céramique ;
La mise à disposition d'un métal d'apport actif entre la première pièce de céramique et la deuxième pièce de céramique ;
L'échauffement du métal d'apport actif au sein d'un process de brasage, **caractérisé en ce que** le métal d'apport actif est mis à disposition de telle sorte qu'est revêtue dans un premier temps au moins une partie de la surface d'au moins l'une des pièces de céramique avec un composant actif du métal d'apport actif, notamment du titane et/ou du zirconium,
et en ce qu'est mis à disposition, sur la partie revêtue, un alliage qui, par sa fusion pendant l'échauffement, s'allie avec le revêtement et forme une zone de jonction entre les deux pièces de céramique, au moins le composant actif réagissant avec au moins une pièce de céramique, la zone de jonction présentant un alliage Zr-Ni-Ti.

2. Procédé selon la revendication 1, pour lequel les deux pièces de céramique sont revêtues au moins sur une partie de la surface avec au moins un composant actif du métal d'apport actif, et pour lequel est mis à disposition l'alliage entre les parties revêtues de la première pièce de céramique et de la deuxième pièce de céramique.

3. Procédé selon la revendication 1 ou 2, pour lequel le process de brasage est un process de brasage sous vide ou un process de brasage sous gaz protecteur.

4. Procédé selon l'une des revendications précédentes, pour lequel le revêtement avec l'au moins un composant actif présente une épaisseur d'au moins 10 nm, notamment d'au moins 40 nm et de préférence d'au moins 80 nm.

5. Procédé selon l'une des revendications précédentes, pour lequel le revêtement avec l'au moins un composant actif présente une épaisseur de pas plus de 400 nm, notamment de pas plus de 300 nm et de préférence de pas plus de 200 nm.

6. Procédé selon l'une des revendications précédentes, pour lequel au moins l'une des pièces de céramique contient du corindon.

7. Produit en céramique (1), comprenant au moins une première pièce de céramique (2) et une deuxième pièce de céramique (3), pour lequel la première pièce de céramique (2) est reliée avec la deuxième pièce de céramique (3) par le biais d'une zone de jonction formée au moyen d'un métal d'apport actif, la zone de jonction présentant un alliage Zr-Ni-Ti, **caractérisé en ce que** la zone de jonction présente une répartition non homogène des composants de l'alliage Zr-Ni-Ti, au moins un composant actif du métal d'apport actif, notamment Ti et/ou Zr, étant enrichi au moins au niveau d'une interface entre l'alliage Zr-Ni-Ti et la céramique, la formule suivante s'appliquant :

$$\frac{\int_{-d/2}^{d/2} |x|\,(c_i(x)-c_i(0))\,dx}{\int_{-d/2}^{d/2} c_i(x)-c_i(0)\,dx} \geq \frac{a \cdot d}{4},$$

où a $\geq$ 1,25, de préférence a $\geq$ 1,5, particulièrement de préférence a $\geq$ 1,7, d étant l'épaisseur de la zone de jonction, le point zéro se situant au centre de la zone de jonction entre les pièces de céramique, et $c_i(x)$ étant la concentration dépendant du lieu de l'au moins une composante active, notamment Ti ou Zr, en pourcentage en masse.

8. Produit en céramique selon la revendication 7, pour lequel

$$\frac{\int_{-d/2}^{d/2}|x|\,c_i(x)\,dx}{\int_{-d/2}^{d/2}c_i(x)\,dx} \geq \frac{a\cdot d}{4} \quad \frac{\int_{-d/2}^{d/2}|x|\cdot c_i(x)\,dx}{\int_{-d/2}^{d/2}c_i(x)\,dx} \geq \frac{a\cdot d}{4},$$

où $a \geq 1{,}1$, de préférence $a \geq 1{,}3$, d étant l'épaisseur de la zone de jonction, le point zéro se situant au centre de la zone de jonction entre les pièces de céramique, et $c_i(x)$ étant la concentration dépendant du lieu de l'au moins une composante active en pourcentage en masse.

9. Produit en céramique selon la revendication 7 ou 8, pour lequel le produit en céramique est un capteur de pression (1), les pièces de céramique comprenant un corps de base (3) et une membrane de mesure (2).

10. Produit en céramique selon l'une des revendications 7 à 9, pour lequel la zone de jonction est un alliage ternaire Zr-Ni-Ti avec un pourcentage en masse $c_{Zr}$ de Zr, un pourcentage en masse $c_{Ni}$ de Ni et un pourcentage en masse $c_{Ti}$ de Ti, la règle suivante s'appliquant :

100 > $c_{Zr}$ + $c_{Ni}$ + $c_{Ti}$ $\geq$ 100 - R, avec R < 0,5, notamment R < 0,3 et de préférence R < 0,25.

11. Produit en céramique selon la revendication 10, pour lequel la règle suivante s'applique pour les concentrations des composants de l'alliage : 55 < $c_{Zr}$ < 65,5, 20,5 < $c_{Ni}$ < 27,5 et 14 < $c_{Ti}$ < 17,5, notamment 61 < $c_{Zr}$ < 63,5, 21,5 < $c_{Ni}$ < 24 et 14,5 < $c_{Ti}$ < 15,5.

12. Produit en céramique selon l'une des revendications 10 à 11, pour lequel il existe une région limite, dans laquelle la concentration d'atomes d'aluminium diffusés à partir de la céramique est supérieure dans le métal d'apport actif à la concentration des atomes Ni dans cette région, cette dernière s'étendant pas moins de 10 nm, notamment pas moins de 40 nm et de préférence pas moins de 80 nm de l'interface entre la pièce de céramique et le métal d'apport actif, en direction du métal d'apport actif.

**Fig.1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0544934 A1
- EP 0445382 A2
- EP 0490807 A2
- EP 0332978 A1